Europäisches Patentamt

European Patent Office

Office européen des brevets

(11) Veröffentlichungsnummer: **0 143 874**
**B1**

(12) # EUROPÄISCHE PATENTSCHRIFT

(45) Veröffentlichungstag der Patentschrift:
25.11.87

(51) Int. Cl.⁴: **G 11 B 23/04**

(21) Anmeldenummer: **84106123.7**

(22) Anmeldetag: **13.12.80**

(54) **Bandkassette gebildet aus Gehäuse und Schutz-/Haltehülle für mindestens eine Bandrolle eines streifen- oder bandförmigen Aufzeichnungsträgers, insbesondere eines Magnetbandes.**

(30) Priorität: **22.12.79 DE 2951951**

(43) Veröffentlichungstag der Anmeldung:
**12.06.85 Patentblatt 85/24**

(45) Bekanntmachung des Hinweises auf die Patenterteilung:
**25.11.87 Patentblatt 87/48**

(84) Benannte Vertragsstaaten:
**AT BE CH DE FR GB IT LI NL SE**

(56) Entgegenhaltungen:
**BE-A-836 317
US-A-3 796 394
US-A-3 800 322
US-A-4 093 151**

(73) Patentinhaber: **BASF Aktiengesellschaft, Carl-Bosch- Strasse 38, D-6700 Ludwigshafen (DE)**

(72) Erfinder: **Reimer, Karl- Juergen, Dietrich-Bonhoeffer- Strasse 21, D-6710 Frankenthal (DE)**
Erfinder: **Pfefferkorn, Dietmar, Muehlweg 71, D-6944 Hemsbach (DE)**
Erfinder: **Koester, Eberhard, Dr., Max- Slevogt-Strasse 23, D-6710 Frankenthal (DE)**
Erfinder: **Kreimes, Norbert, Rheinecke 14, D-6700 Ludwigshafen (DE)**
Erfinder: **Andriessen, Wilhelmus, Fritz- Wendel-Strasse 14, D-6706 Wachenheim (DE)**
Erfinder: **Wagner, Herbert, Dr., Mundenheimer Strasse 157, D-6700 Ludwigshafen (DE)**
Erfinder: **Wagner, Werner, Dr., Fernacher Hoehe 22, D-7602 Oberkirch (DE)**

EP 0 143 874 B1

## Beschreibung

### Gebiet der Erfindung

Die Erfindung betrifft eine Bandkassette gebildet aus einem Gehäuse und einer Schutz-/Haltehülle für mindestens eine Bandrolle eines streifen- oder bandförmigen Aufzeichnungsträgers, insbesondere eines Magnetbandes, worin das Gehäuse aus etwa quaderförmigen, die Bandkassetten-Außenform bildenden, zu öffnenden und schließbaren Boden- und Deckelteilen besteht und Öffnungen zum Eintritt geräteseitiger Antriebs- und Abtastorgane und zum Ineingriffkommen der Abtastorgane mit einem im Gehäuse befindlichen, zumindest auf einer Bandrolle aufgewickelten Aufzeichnungsträger mit einem zugänglichen Bandabschnitt sowie Führungseinrichtungen für den Aufzeichnungsträger aufweist, wobei der aufgewickelte Aufzeichnungsträger mit seinem Bandabschnitt in der Schutz-/Haltehülle untergebracht ist, die zum Betrieb der Bandkassette in das Gehäuse einsetzbar ist und wobei Abtast- und Antriebsorgane an den Aufzeichnungsträger herantreten bzw. in den Schutz-/Haltehülle eintreten können.

### Stand der Technik zum Gegenstand der Erfindung

Es ist bekannt, Bandkassetten für bandförmige Aufzeichnungsträger wie Film und Magnetband für die Signalspeicherung in entsprechenden Aufnahme- und/oder Wiedergabe-Kassettengeräten zu verwenden. Zu speichernde/gespeicherte Signale sind dabei Analog- oder Digitalsignale, die Audio-, Video-, Daten- oder Instrumentations-Information oder Kombinationen davon enthalten.

Solche Bandkassetten sind in vielfältigen Ausführungen bekannt und auf den Audio-, Video-, Daten- und Instrumentations-Kassetten-Märkten im Einsatz. Im folgenden werden einige Beispiele für derartige Kassetten kurz erläutert.

Die Kompakt-Kassette hat sich auf dem Audio-Markt weltweit durchgesetzt, es sind jedoch auch Sonderformen für die Daten- und Video-Aufzeichnung bekanntgeworden, wobei letztere jedoch aufwendig - meist in Einzelfertigung - hergestellt werden.

Kompakt-Kassetten als Billigkassetten sind Gehäuse mit relativ großen Toleranzen und fehlerhaft, insbesondere im Hinblick suf die Bandführungseigenschaften, hergestellt, so daß schon umabhängig von der Qualität des darin untergebrachten Magnetbandes nur eine schlechte Aufnahme/Wiedergabequalität erreichbar ist.

Es ist eine, die Form der Kompakt-Kassette besitzende sogenannte Metallrahmen-Kassette bekanntgeworden. Darin sind die üblichen Bandführungselemente, Kassetteninnenwände, Bandwickelkernlagerung und Bandführungsrollen mit großer Präzision, jedoch nur sehr aufwendig herstellbar. Als Material wurde Aluminium verwendet.

Es ist gemäß DE-PS-20 41 977 auch bekannt, die Bandführungselemente zumindest weitgehend aus der Kassette wieder in das Gerät zu verlegen, so daß die Kassette zu einem reinen Behälter für die Bandwickel wird, in den durch geeignete Öffnungen die geräteseitigen Bandführungselemente an das Band und die Bandwickel eintreten, so daß ein Bandlauf höchster Präzision weitgehend unabhängig vom Kassettengehäuse erreicht wird. Dieser Kassettentyp ist für Daten-, Video- und Audio-Signalaufzeichnungen gleichermaßen gut geeignet und außerdem in automatischen Kassettenabspielanlagen vorteilhaft einsetzbar. Bei auf dem Markt befindlichen Kassetten besteht das Gehäuse aus Kunststoffmaterial, z. B. Polystyrol, enthält jedoch Metallteile wie Bremsplatten und Bandführungsrollen und ist deshalb in der Herstellung z.Zt. nicht sehr wirtschaftlich.

Mit der BE-PS-836 317 ist ein als Ladeeinrichtung bezeichneter, im wesentlichen aus einem oberen und unteren Flansch bestehender Träger für zwei Magnetbandrollen und einer dazwischen angeordneten losen Bandschlaufe bekannt, der in ein der üblichen Kompaktkassettenform entsprechendes aufklappbares Gehäuse einsetzbar ist. Nach Herumlegen der Bandschlaufe von Hand um die Bandführungselemente des Gehäuses und Schließen desselben ist ein Betrieb der damit gebildeten Magnetbandkassetten in üblichen Kassettenrekordern möglich. Mit dieser bekannten Ladeeinrichtung und dem Gehäuse sind eine Handhabbarkeit durch den Amateur, ein Schutz des Magnetbandes außerhalb des Gehäuses sowie eine Ladeerleichterung des Aufzeichnungsträgers in das Gehäuse nicht gegeben.

Mit der US-PS-3 796 394 ist ferner eine zweiteilige Kompaktkassette bekannt, wobei ein Vorderteil mit der Kassettenfrontseite, den Bandführungselementen und den beiden Bandrollen mit einem Rückteil zu der vollständigen Kassettenform ergänzt wird. Der Rückteil hat dabei lediglich eine Rahmen- und Verschlußfunktion für den Vorderteil, um übliche Schweiß- oder Klebeverbindungen an den Kassettenteilen zu vermeiden und Billigmaterialien verwenden zu können. Eine Verriegelungseinrichtung am Rückteil stellt eine vorgegebene räumliche Zuordnung der Vorder- und Rückteile der zusammengesetzten Kassette sicher. Die Teile sind auch wieder voneinander lösbar.

Obwohl damit eine gewisse Austauschmöglichkeit des einen Vorderteils gegen einen anderen bei demselben Rückteil gegeben ist, wird höchstens die Qualität handelsüblicher Kompaktkassetten erreicht, da die Bandführungselemente weiterhin integrierte Teile des Kassettenvorderteils bleiben, der nach wie vor aus üblichen Kunststoffen und daher mit Toleranzen behaftet hergestellt werden soll. Eine getrennte Handhabung des Vorderteils mit den Bandspulen ist bei dieser bekannten Kassette nicht beabsichtigt und auch wegen der offenen Bauweise des Vorderteils nicht ratsam.

Mit der US-PS-4 093 151 ist ferner ein kassettenartiger, aufklappbarer Behälter bekannt mit Drehtellern für Magnetbandspulen, wobei letztere nach Öffnen des Behälters auf die Drehteller aufgelegt werden nach vorherigem Herumlegen der Bandschlaufe um die Bandführungselemente. Nach Schließen des Behälterdeckels sind die Bandspulen innerhalb des Behälters betreibbar. Auch bei diesem bekannten Behälter für Bandspulen bilden letztere keine für sich außerhalb des Behälters problemlos handhabbare Einheit.

## Aufgabenstellung der Erfindung

Ausgehend von diesem Stand der Technik auf dem Bandkassettengebiet hat sich die Erfindung die Aufgabe gestellt, eine hochwertige Bandkassette, insbesondere eine Magnetbandkassette mit hoher Präzision hinsichtlich Bandlaufeigenschaften und mit leichter Austauschmöglichkeit des Bandes durch den Amateur bereitzustellen.

## Lösungen und Vorteile der Erfindung

Die Aufgabe wird mit einer Bandkassette gebildet aus einem Gehäuse und einer Schutz-/Haltehülle gemäß Anspruch 1 gelöst.

Dadurch werden eine Präzisionsausbildung des Gehäuses sowie eine beschädigungs- und verschmutzungsfreie Ausbildung und Handhabbarkeit der Schutz-/Haltehülle und ein beschädigungsfreier und einfacher Zusammenbau von Schutz-/Haltehülle und Gehäuse zu einer hochwertigen Bandkassette erreicht. Öffnen und Schließen des Gehäuses wird damit in der Ebene der Bandkassette ermöglicht.

Da die Bandführungseinrichtungen im wesentlichen ausschließlich am Bodenteil des Gehäuses vorgesehen sind, können so extrem gute Bandlaufvoraussetzungen geschaffen werden, daß mit kleineren Kopfspaltlängen/Spurbreiten größere Aufzeichnungsdichten ohne weiteres erreichbar sind.

Mit den erfindungsgemäßen Ausbildungen des Gehäuses und der Schutz-/Haltehülle wird praktisch eine Aufnahme der Schutz-/Haltehülle ermöglicht, wodurch ein leichtes Einlegen in eine vorbestimmte Position und/oder ein problemloses Einführen erreichbar ist.

Damit ergibt sich die volle Bandaustauschbarkeit, da beide Einheiten - Gehäuse und Schutz-/Haltehülle - getrennte Handelsprodukte sein können. Es erschließt sich außer der Wahl zwischen verschiedenen Bandlängen, unterschiedlichen Bandeigenschaften (fotografisch oder magnetisch) auch die Möglichkeit Produkte verschiedener Hersteller optimal zu kombinieren, z. B. um besondere Audio- oder Videoeffekte zu erreichen oder besonderen Anforderungen bei der Daten- oder Instrumentationssignalspeicherung zu genügen.

Es ergibt sich für den Amateur- und Profimarkt aller Signalarten außer einer Qualitätsverbesserung bei Aufzeichnungs/Wiedergabe eine höhere Aufzeichnungsdichte - was digitale Signalkodierungen erleichtert und größere Speicherkapazitäten bereitstellt. Die Schutz-/Haltehülle ist insbesondere durch Amateure einfach handhabbar und kann zweckmäßig archivierbar sein und besteht aus geeignetem Material und hat eine geeignete Form für ausreichenden Schutz des Bandmaterials gegen äußere Beschädigungen.

Das Gehäuse ist zweckmäßig aus formstabilerem Material hergestellt bei ebenfalls einfacher Handhabbarkeit, besonders im Hinblick auf den Amateur, bei hoher weitgehend unveränderlicher Präzision seiner Bandlaufeigenschaften, wenn es zusammen mit einem Aufzeichnungsband innerhalb einer Schutz-/Haltehülle oder einem Aufzeichnungsband, das aus einer Schutz-/Haltehülle entnommen ist, in einem Gerät betrieben wird.

Es kann das Kassettengehäuse auch aus heute handelsüblichen Geräten herausgenommenen Teilen neben einer reinen Kassettenhülle bestehen, da das Gehäuse im wesentlichen Präzisionseigenschaften besitzen soll, das jedoch vorteilhafterweise auch wirtschaftlich in Serienfertigung herstellbar ssein soll.

Die Verwendung von Filmen als Bandmaterial kann außer der Filmart auch die Sensibilität des Filmmaterials wie auch ein spezieller Kontrast- oder Farbeffekt das Kriterium für einen Filmwechsel sein.

Bei Magnetband ist es möglich, außer der Bandart (Audio- oder Videoband usw.) auch die Aussteuerbarkeit oder Empfindlichkeit des Magnetmaterials oder auch die Art des Bandmaterials oder spezielle Meß- und Prüfeigenschaften von Magnetbändern zum Kriterium für einen Bandaustausch zu machen.

Im folgenden werden Detailmerkmale des Erfindungsgegenstandes diskutiert.

Eine Schutz-/Haltehülle für die erfindungsgemäße Bandkassette ist wirtschaftlich aus Kunststoff und/oder Papiermaterial herstellbar, zweckmäßig im Tiefziehverfahren, im Spritzguß oder in vergleichbaren Verfahren für die Massenherstellung, z. B. im Preßverfahren. Die

Form der Hülle soll ein einfaches Konfektionieren (Bestücken mit Bandmaterial) auf möglichst automatischem Wege ermöglichen.

Für die Fälle, daß die Schutz-/Haltehülle ohne Bandwickel aus dem Gehäuse bei geschlossenem Deckelteil entnommen oder überhaupt von einer Schmalseite des Gehäuses eingesetzt werden soll, kann zum Verschließen einer Öffnung an einer Gehäuseschmalseite eine Klappe vorgesehen sein.

Erfindungsgemäß kann die Schutz-/Haltehülle aus einem Hohlkörper bestehen, der an der Frontseite in Draufsicht mindestens einen Ausschnitt aufweist, über die der Bandabschnitt gespannt ist, und in deren Bereich die Abtastorgane in Bandkontakt und die Führungselemente in Bandeingriff bringbar sind.

Praktisch können zur guten Abdichtung des Innenraums der Schutz-/Haltehülle schlitzförmige Austrittsöffnungen und Bandführungselemente für den Bandabschnitt nahe den Enden des Ausschnitts vorgesehen sein.

Die Bandführungselemente können vorteilhaft aus Haltezapfenstümpfen an Unter- und Oberteil der Schutz-/Haltehülle bestehen, wobei zwischen den Haltezapfenstümpfen ein Zwischenraum vorhanden ist, durch den das Band bei Entnahme der Schutz-/Haltehülle in Horizontalebene aus dem Gehäuse hindurchtreten kann.

Es ist ferner vorteilhaft, wenn die Schutz-/Haltehülle im Umriß über die Draufsichtskontur des Gehäuses hervorsteht bei betriebsbereit eingelegter Schutz-/Haltehülle in dem Gehäuse. Damit ist eine Entnahme der leeren Hülle leichter möglich, wenn Band und Bandwickel im Gehäuse verbleiben sollen.

Die Vertikal-Gelenkverbindung kann praktisch aus einer Gelenkbuchse und einem Gelenkzapfen bestehen, die insbesondere nahe der Frontseite des Gehäuses angeordnet sind. Vorteilhaft sind Gelenkbuchse und Gelenkzapfen lösbar und verrastbar miteinander verbunden, was herstellungs- und handhabungsmäßig günstig ist.

Praktische Ausgestaltungen der Schutz-/Haltehülle und des Gehäuses der vorliegenden Erfindung ergeben sich aus vorstehenden Mekmalen wie folgt.

Dabei umfaßt die Schutz-/Haltehülle für mindestens einen Bandwickel mindestens einen Hohlraum mit einer dem maximalen Bandrollendurchmesser angepaßten Größe und Form. Eine Schutz-/Haltehülle für zwei Bandwickel kann auch einen zweimal dem halben Bandrollendurchmesser entsprechenden Hohlraum aufweisen. Vorteilhaft herstellbar ist die Schutz-/Haltehülle aus geeignetem Kunststoffmaterial wie etwa Hart-Polyvinylchlorid-Folie als zumindest ein Tiefzieh- oder Spritzteil ausgebildet.

Das Gehäuse besteht wie bereits bekannt aus einem etwa quaderförmigen Hohlkörper mit Deckel- und Bodenteil und diese verbindenden Seitenteilen, die einen oder mehrere Bandrollen umschließen, wobei geräteseitige Antriebseinrichtungen den oder die Bandrollen innerhalb des Hohlkörpers zum Bandtransport antreiben und geräteseitige Abtastorgane, mit dem transportierten Band in Kontakt stehen/in Kontakt bringbar sind zur Aufzeichnung/Wiedergabe von Signalen auf das bzw. von dem Band, wobei erfindungsgemäß die Boden- und Deckelteile mittels Vertikalgelenk-Verbindungseinrichtungen horizontal zueinander bewegbar miteinander verbunden oder verbindbar sind, sowie verriegelbar miteinander sind.

Es zeigen

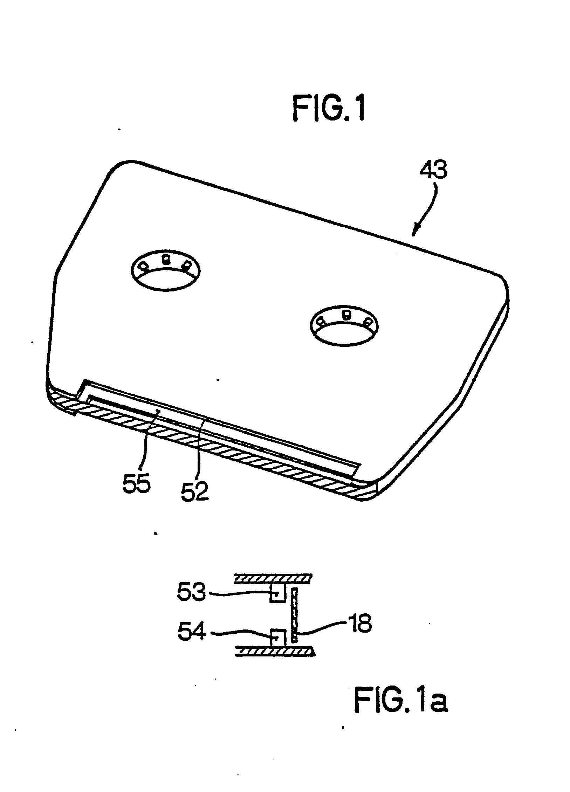

Fig. 1 eine Schutz-/Haltehülle nach der Erfindung für zwei Bandwickel

Fig. 1a eine Schnittansicht durch einen Eckteil der Hülle

Fig. 2 die Schutz-/Haltehülle eingesetzt in ein teilweise geöffnetes Gehäuse nach der Erfindung

Fig. 2a eine Einzelheit, Vertikalgelenk der Fig. 2

Fig. 3 das geschlossene Gehäuse der Fig. 2 mit der eingesetzten Schutzhülle von rückwärts gesehen.

Die Bandkassette der Erfindung entspricht einer Kompaktkassette, die ihren Abmessungen nach der DIN-Norm 45 516 entsprechen und dieselben Funktionen wie eine übliche Kompakt-Kassette erfüllen soll.

Das Gehäuse 44 ist ein Präzisionsgehäuse das zur Aufnahme einer Schutz-/ Haltehülle 43 ("Hülle") mit zwei Bandrollen oder -wickeln eingerichtet ist.

Das Gehäuse 44 besteht vorzugsweise aus einem Material, das seriemäßig verarbeitbar ist und formstabil auch in breiten Temperaturbereichen bleibt. Das Gehäuse 44 besteht aus zwei Teilen, dem Bodenteil und dem Deckelteil 45, die hier bewegbar über ein Gelenk 46 miteinander verbunden sind.

Die Größe und Form der Hülle 43 ist hier z. B. durch den maximalen Bandwickeldurchmesser bestimmt, wenn die Hülle beim Betrieb mit dem Gehäuse 44 in diesem befindlich bleiben soll. Für diesen Fall kann die Hülle 43 einstückig oder aus zwei fest miteinander verbundenen Teilen aus geeignetem Material hergestellt sein.

Wenn die Hülle 43 jedoch nach Einlegen in das Gehäuse 44 teilweise oder völlig entfernt werden soll - z. B. um nachteilige Einflüsse auf die Bandführung von vornherein zu vermeiden - kann die Größe der Hüllenform auch durch den Durchmesser des halbvollen Bandwickels bestimmt sein. In diesem Fall ist mindestens eine Hälfte der Hülle abnehmbar ausgebildet, und beide Hüllenhälften können schachtelartig zusammensteckbar ausgebildet sein.

In einem Ausführungsbeispiel kann die Hülle 43 aus zwei Teilen bestehen, die zur Mittelebene der Hülle 43 symmetrisch oder unsymmetrisch ausgebildet sein können, wobei die symmetrische Form die Herstellung in Serie stark erleichtert. Die Hülle 43 besteht zweckmäßigerweise aus Kunststoff, z. B. aus Folienmaterial aus Polystyrol, Polyethylen, vorzugsweise Hart-PVC (Polyvinylchlorid) gegebenenfalls in Verbindung mit Papier- oder Kartonmaterial, wobei die Teile in geeigneter Weise, z. B. durch Schweißen, verbunden sein können.

Der Antrieb der Bandwickel innerhalb der Hülle 43 oder teilweise oder völlig ohne Hülle 43 erfolgt über geräteseitige Antriebsspindeln, die in die Öffnungen der Bandwickelkerne eintreten.

Das Gehäuse 44 ist aus geeignetem thermisch und mechanisch stabilen Material herstellbar, z. B. aus Metall, einer Metallegierung, einem Kunststoffmaterial gegebenenfalls glasfaserverstärkt, oder kombiniert aus Kunststoffteilen und Metallteilen. Zweckmäßig besteht das Gehäuse 44 aus zwei Teilen 45 und 64, die über ein Vertikelgelenk miteinander verbunden sind, so daß ein Schwenken des Deckelteils 45 in einer Horizontalebene ermöglicht wird.

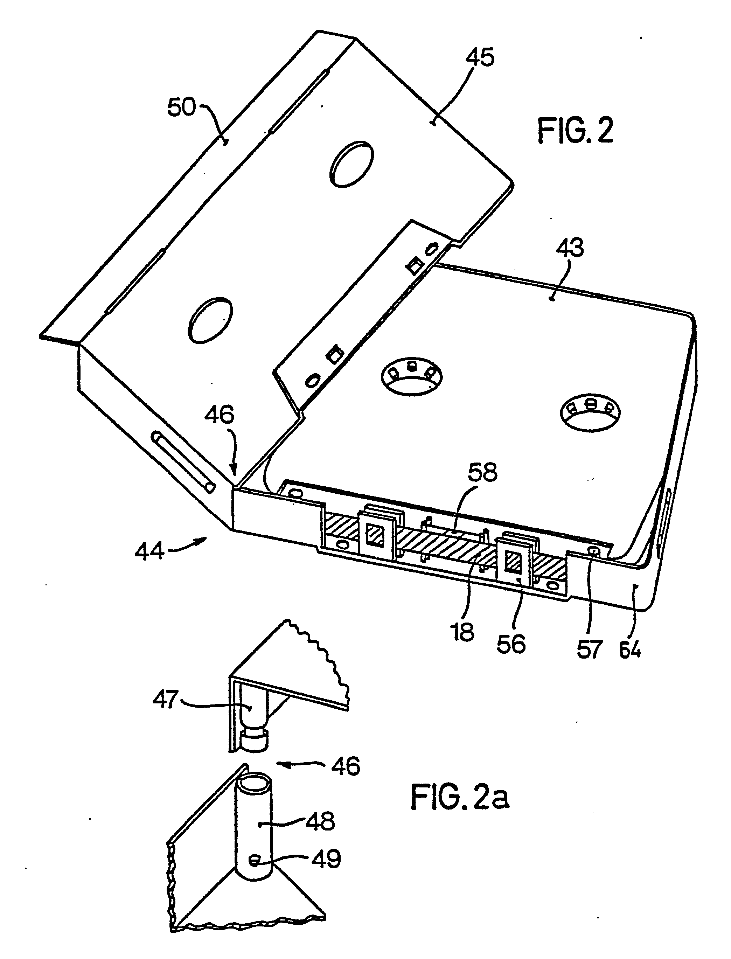

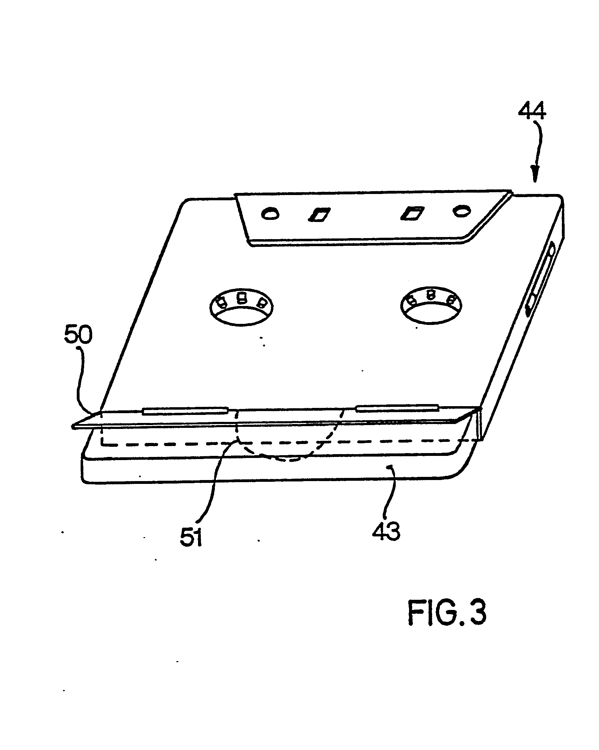

Über einen Fortsatz 51 an der Hülle 43 oder einen über das Format des Gehäuses 44 herausragenden Hüllenteil (vgl. z. B. Fig. 2 oder 3) ist eine Entnahme der Hülle 43 aus dem Gehäuse 44 möglich.

Nach Betätigen des Verriegelungsmechanismus wird das Gehäuse 44 geöffnet und die Hülle 43 ist, gegebenenfalls zu Archivierzwecken, entnehmbar.

Die Hülle ist mit 43 bezeichnet und dient zum Betrieb mit dem Gehäuse 44, dessen Deckelteil 45 um eine senkrecht angeordnete Gelenkachse 46 in Horizontalebene schwenkbar ist.

Die Gelenkachse 46 besteht aus einem Zapfen 47 und einer Buchse 48 mit Axialaaretierfeder 49. Der Gehäusedeckelteil 45 weist eine rückwärtige, zweckmäßig in Schließrichtung vorgespannte Gelenkklappe 50 auf, die wiederum die Verwendung einer nach Einlegen des Bandes und der Bandwickel von außen herausnehmbaren Hülle 43 gestattet. Entweder ist ein geeigneter Fortsatz 51 an der Hülle oder eine gegenüber der Gehäusebreite verbreiterte Hüllenform vorgesehen zur Entnahme von Hand. Durch Ziehen am Fortsatz 51 oder am herausragenden Hüllenteil ist die Hülle 43 nach rückwärts aus dem Gehäuse 44 entnehmbar, die Gelenkklappe 50 schließt selbsttätig. Die Bandwickel liegen nunmehr betriebsbereit im Gehäuse 44, wobei Bandführungsrahmen 56 und Führungsrollen 57 das Band 18 seitlich vom Bandandruckelement 58 führen. Das Einsetzen der Hülle 43 erfolgt von oben in den Bodenteil 64, wobei das Band 18 einen langen Ausschnitt 52 an der Hülle 43 überspannt, durch den die Bandführungselemente des Gehäuses 44 hinter das Band 18 gelangen können. In den Eckbereichen der Hülle 43 bzw. an den Enden des langen Ausschnitts 52 sind Halteelemente für das Band 18 vorgesehen, damit es nicht in den Innenraum der Hülle 43 hineinrutschen kann, wonach nur noch ein umständliches Einsetzen in das Gehäuse 44 möglich wäre. Die Halteelemente müssen vielmehr im Hinblick auf die Entnahme der Hülle 43 aus dem Gehäuse so ausgebildet und angeordnet sein, daß das Band 18 durch die zweckmäßig an Unter- und Oberteil angebrachten Haltezapfenstümpfe 53 und 54 hindurchrutschen kann. Ein Wiedereinsetzen der Bandwickel in die Hülle 43 kann hier nur nach Öffnen des Deckelteils 45 des Gehäuses 44, Einschieben des Hüllenunterteils und Aufsetzen des Hüllenoberteils erfolgen.

Die Hülle 43 ist zweckmäßig in drei Seiten geschlossen ausgebildet und die Bandwickel treten durch die Öffnung 55, die an den Ausschnitt 52 angrenzt, aus der Hülle 43 heraus. Zweckmäßig ist die Hülle 43 schachtelartig z. B. symmetrisch in ihrer Mittelebene teilbar ausgebildet.

**Patentansprüche**

1. Bandkassette gebildet aus Gehäuse und Schutz-/Haltehülle für mindestens eine Bandrolle eines streifen- oder bandförmigen Aufzeichnungsträgers, insbesondere eines Magnetbandes, worin das Gehäuse (44) aus etwa quaderförmigen aus die Bandkassetten-Außenform bildenden, zu öffnenden und schließbaren Boden- und Deckelteilen besteht, und Öffnungen zum Eintritt geräteseitiger Antriebs- und Abtastorgane und zum Ineingriffkommen der Abtastorgane mit dem im Gehäuse befindlichen, zumindest auf einer Bandrolle aufgewickelten Aufzeichnungsträger (18) mit einer Bandschlaufe sowie Führungseinrichtungen für den Aufzeichnungsträger aufweist, wobei der aufgewickelte Aufzeichnungsträger mit seiner Bandschlaufe in der Schutz-/Haltehülle untergebracht ist, die zum Betrieb der Bandkassette in das Gehäuse (44) einsetzbar ist und wobei Abtast- und Antriebsorgane an den Aufzeichnungsträger herantreten bzw. in die Schutz-/Haltehülle eintreten können, dadurch gekennzeichnet, daß die Schutz-/Haltehülle (43) auf wenigstens drei Umrißseiten sowie an Boden- und Deckelseiten im wesentlichen geschlossen ausgebildet ist und daß ein zugänglicher Bandabschnitt in bzw. an der Schutz-/Haltehülle aufgespannt ist, daß zwischen Boden- und Deckelteil des Gehäuses (44) eine Vertikalgelenk-Verbindung (46) vorgesehen ist und nach Horizontal-Verschwenken des Deckelteils die Schutz-/Haltehülle (43) in das geöffnete Bodenteil einsetzbar ist bzw. daraus entnehmbar ist, so daß die Führungseinrichtungen (56, 57, 58) mit dem zugänglichen Bandabschnitt in Eingriff treten für den Betrieb des Aufzeichnungsträgers (18) im Gehäuse (44).

2. Schutz-/Haltehülle für eine Bandkassette nach Anspruch 1, gekennzeichnet durch einen Hohlkörper, der an der Frontseite in Draufsicht mindestens einen Ausschnitt (52) aufweist, über den der Bandabschnitt gespannt ist und in dessen Bereich die Abtastorgane in Bandkontakt und die Führungselemente in Bandeingriff bringbar sind.

3. Schutz-/Haltehülle nach Anspruch 2, dadurch gekennzeichnet, daß für den Bandabschnitt schlitzförmige Austrittsöffnungen nahe den Enden des Ausschnitts (52) vorgesehen sind.

4. Schutz-/Haltehülle nach Anspruch 2 oder 3, dadurch gekennzeichnet, daß nahe den Enden des Ausschnitts (52) Führungseinrichtungen Bandführungselemente (53, 54) angeordnet sind.

5. Schutz-/Haltehülle nach Anspruch 4, dadurch gekennzeichnet, daß die Bandführungselemente aus Haltezapfenstümpfen (53, 54) an Unter- und Oberteil bestehen, wobei zwischen den Haltezapfenstümpfen (53, 54) ein Zwischenraum vorhanden ist, durch den das Band (18) bei Entnahme der Schutz-/Haltehülle (43) in Horizontalebene aus dem Gehäuse (44) hindurchtreten kann.

6. Schutz-/Haltehülle nach einem oder mehreren der Ansprüche 1 bis 5, dadurch gekennzeichnet, daß der Umriß oder ein Fortsatz (51) über die Draufsichtskontur des Gehäuses hervorsteht bei betriebsbereit eingelegter Schutz-/Haltehülle (43) in dem Gehäuse (44).

7. Schutz-/Haltehülle nach einem oder mehreren der Ansprüche 1 bis 6 für mindestens eine Bandrolle auf mindestens einem Rollenkern, gekennzeichnet durch mindestens einen Hohlraum mit einer dem maximalen Bandrollendurchmesser angepaßten Größe und Form.

8. Schutz-/Haltehülle nach Ansprüchen 1 bis 6 für eine Bandkassette mit zwei Bandwickeln, gekennzeichnet durch einen zweimal dem halben Bandrollendurchmesser in Größe und Form angepaßten Hohlraum.

9. Gehäuse für eine Bandkassette nach Anspruch 1, dadurch gekennzeichnet, daß die Vertikalgelenkverbindung aus einer Gelenkbuchse (48) und einem Gelenkzapfen (47) besteht, die insbesondere nahe der Frontseite des Gehäuses (44) angeordnet sind.

10. Gehäuse nach Anspruch 9, dadurch gekennzeichnet, daß die Gelenkbuchsen (48)/Gelenkzapfen (47)-Verbindung lösbar und verrastbar ausgebildet ist.

11. Gehäuse nach Anspruch 9 oder 10, dadurch gekennzeichnet, daß die Führungseinrichtungen (56-58) im wesentlichen am Bodenteil des Gehäuses (44) vorgesehen sind.

12. Gehäuse nach einem der Ansprüche 9 bis 11, dadurch gekennzeichnet, daß eine zum Verschließen einer Öffnung zum Einführen/zur Entnahme der Schutz-/Haltehülle (43) dienende Klappe (50) an einer Gehäuseschmalseite ausgebildet ist.

## Claims

1. A tape cassette comprising a housing and a protective holder for at least one reel of a recording medium in strip or tape form, particularly a magnetic tape, in which the housing (44) consists of roughly rectangular bottom and lid parts which can be opened and closed and form the outer shape of the tape cassette; has openings for admitting drive members and scanning means on the transport apparatus and for enabling the scanning means to engage the recording medium (18) which comprises a loop of tape, is located inside the housing and is wound on at least one reel; and has guide means for the recording medium, the reel of recording medium with the loop of tape being accommodated in the protective holder which, for operation of the tape cassette, can be inserted in the housing (44), and it being possible for the scanning means and drive members to enter the protective holder and cooperate with the recording medium, wherein the protective holder (43) is substantially closed on at least three narrow sides and at the top and bottom, and an accessible section of tape extends along the length of the protective holder, and wherein a vertical hinge connection (46) is provided between the bottom and lid parts of the housing (44) and, after pivoting the lid part in a horizontal plane, the protective holder (43) can be inserted into, or removed from, the opened bottom part, so that the guide means (56, 57, 58) can engage the accessible section of tape for operation of the recording medium (18) inside the housing (44).

2. A protective holder for a tape cassette as claimed in claim 1, comprising a hollow member which, in plan view, has at least one recess (52) in the front wall, which recess is spanned by the section of tape and in whose region the scanning means can be brought into contact with the tape and the guide means can be caused to engage the tape.

3. A protective holder as claimed in claim 2, wherein slit-shaped outlet openings for the section of tape are provided near the ends of the recess (52).

4. A protective holder as claimed in claim 2 or 3, wherein the guide means (tape guide elements (53, 54)) are provided near the ends of the recess (52).

5. A protective holder as claimed in claim 4, wherein the tape guide elements consist of retaining stubs (53, 54) on the upper and lower parts, there being a gap between the retaining stubs (53, 54) through which the tape (18) can pass when the protective holder (43) is removed from the housing (44) in a horizontal direction.

6. A protective holder as claimed in one or more of claims 1 to 5, wherein its contour or a projection (51) sticks out beyond the plan-view contour of the housing when the protective holder (43) is in the operative position in the housing (44).

7. A protective holder as claimed in one or more of claims 1 to 6 for at least one reel of tape on at least one hub, having at least one cavity whose size and shape is matched to that of the full reel of tape.

8. A protective holder as claimed in claims 1 to 6 for a tape cassette having two reels of tape, having a cavity, whose size and shape is matched to that of the two reels each carrying half the total length of tape.

9. A housing for a tape cassette as claimed in claim 1, wherein the vertical hinge connection consists of a bushing (48) and a pivot (47) which are arranged in particular near the front wall of the housing (44).

10. A housing as claimed in claim 9, wherein the bushing (48) and pivot (47) forming the connection can be separated from one another and clicked together.

11. A housing as claimed in claim 9 or 10, wherein the guide means (56-58) are provided mainly on the bottom part of the housing (44).

12. A housing as claimed in any of claims 9 to 11, wherein a narrow side of the housing is provided with a flap (50) serving to close an opening for inserting/removing the protective holder (43).

## Revendications

1. Casette de bande formée d'un boîtier et d'une enveloppe de protection et de retenue pour au moins un rouleau de bande d'un support d'enregistrement en forme de bande ou de ruban, en particulier d'une bande magnétique, dans laquelle le boîtier (44) est constitué par des parties fond et couvercle servant à ouvrir et fermer, sensiblement quadrangulaires, donnant sa forme extérieure à la cassette de bande, et présente des ouvertures pour l'introduction des organes d'entrainement et de lecture, côté appareil et la mise en prise des organes de lecture avec le support d'enregistrement (18) avec une boucle, se trouvant dans le boîtier, enroulé sur au moins un rouleau de bande, ainsi que des moyens de guidage du support d'enregistrement, le support d'enregistrement enroulé, avec sa boucle, étant introduit dans l'enveloppe de protection et de retenue, qui peut être introduite dans le boitier (44) pour l'exploitation de la cassette de bande et les organes d'entraînement et de lecture pouvant s'approcher du support d'enregistrement ou pénétrer dans l'enveloppe de protection et de retenue, caractérisé par le fait que l'enveloppe de protection et de retenue (43) est sensiblement close sur au moins trois faces de sa périphérie ainsi que sur les faces de fond et de couvercle et qu'une section de bande accessible s'étend dans ou contre l'enveloppe de protection et qu'il est prévu une liaison à axe d'articulation vertical (46) entre partie fond et partie couvercle du boitier (44) et, après pivotement horizontal de la partie couvercle, l'enveloppe de protection et retenue (43) peut être introduite dans ou prélever de la partie fond ouverte, de telle sorte que les moyens de guidage (56, 57, 58) viennent en prise avec la section de bande accessible, pour l'exploitation du support d'enregistrement (18) dans le boîtier (44).

2. Enveloppe de protection et retenue pour cassette de bande selon la revendication 1, caractérisée par un corps creux, qui possède au moins une découpure (52) en plan sur la face frontale, à travers laquelle s'etend la section de bande et dans le voisinage de laquelle les organes de lecture peuvent être mis en contact avec la bande et les éléments de guidage en prise avec la bande.

3. Enveloppe de protection et retenue selon la revendication 2, caractérisée par le fait qu'au voisinage des extrémités de la découpure (52) sont prévues des ouvertures de sortie, en forme de fentes, pour la section de bande.

4. Enveloppe de protection et retenue selon la revendication 2 ou 3, caractérisée par le fait qu'au voisinage des extrémités de la découpure (52) sont disposés les moyens de guidage, éléments de guidage de bande (53, 54).

5. Enveloppe de protection et retenue selon la revendication 4, caractérisée par le fait que les éléments de guidage de bande sont constitués par des petits tenons de retenue (53, 54) sur la partie inférieure et la partie supérieure, un intervalle étant prévu entre les tenons (53, 54) à travers lequel la bande (18) peut passer lorsqu'on sort l'enveloppe de protection et retenue (43) du boîtier (44) dans un plan horizontal.

6. Enveloppe de protection et retenue selon l'une des revendications 1 à 5, caractérisée par le fait que la pérphérie ou un appendice (51) fait saillie du contour en plan du boîtier, lorsque l'enveloppe de protection et retenue (43) a été introduite, pour l'exploitation, dans le boîtier (44).

7. Enveloppe de protection et retenue selon l'une des revendications 1 à 6, pour au moins un rouleau de bande sur au moins un axe de rouleau, caractérisée par au moins un vide de grandeur et forme adaptées au diamètre maximal des rouleaux de bande.

8. Enveloppe de protection et retenue selon les revendications 1 à 6, pour cassette de bande à deux bobinages de bande, caractérisée par un vide adapté en grosseur et forme au double du demi-diamètre des rouleaux de bande.

9. Boîtier pour cassette de bande selon la revendication 1, caractérisé par le fait que la liaison à axe d'articulation vertical est constituée par une douille (48) et un pivot (47), qui sont disposés, en particulier, au voisinage de la face frontale du boîtier (44).

10. Boîtier selon la revendication 9, caractérisé par le fait que la liaison douille (48) pivot d'articulation (47), est détachable et blocable.

11. Boîtier selon la revendication 9 ou 10, caractérisé par le fait que les moyens de guidage (56-58) sont prévus en principe sur la partie fond du boîtier (44).

12. Boîtier selon l'une des revendications 9 à 11, caractérisé par le fait qu'un volet (50), servant à fermer une ouverture d'introduction ou prélèvement de l'enveloppe de protection et retenue (48), est formé sur une face étroite du boîtier

# FIG.1

43

55   52

53

54   18

# FIG.1a

FIG. 2

FIG. 2a

3

FIG.3